(19) Europäisches Patentamt
European Patent Office
Office européen des brevets

(11) EP 4 253 451 A1

(12) **EUROPEAN PATENT APPLICATION**
published in accordance with Art. 153(4) EPC

(43) Date of publication:
**04.10.2023 Bulletin 2023/40**

(21) Application number: **22825382.9**

(22) Date of filing: **17.06.2022**

(51) International Patent Classification (IPC):
***C08J 3/12*** *(2006.01)* ***C08J 3/24*** *(2006.01)*
***C08F 2/01*** *(2006.01)* ***B29B 9/12*** *(2006.01)*

(52) Cooperative Patent Classification (CPC):
**B29B 9/12; C08F 2/01; C08J 3/12; C08J 3/24**

(86) International application number:
**PCT/KR2022/008651**

(87) International publication number:
**WO 2022/265459 (22.12.2022 Gazette 2022/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.06.2021 KR 20210079644**

(71) Applicant: **Lg Chem, Ltd.**
**Seoul 07336 (KR)**

(72) Inventors:
- **MIN, Yoon Jae**
  **Daejeon 34122 (KR)**
- **KIM, Gicheul**
  **Daejeon 34122 (KR)**
- **NAM, Dae Woo**
  **Daejeon 34122 (KR)**
- **CHO, Jeong Kug**
  **Daejeon 34122 (KR)**
- **PARK, Se Yeol**
  **Daejeon 34122 (KR)**
- **LEE, Seul Ah**
  **Daejeon 34122 (KR)**
- **CHUNG, Ui Seok**
  **Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **METHOD FOR PREPARING SUPER ABSORBENT POLYMER, AND SUPER ABSORBENT POLYMER**

(57) This invention relates to a method for preparing super absorbent polymer. More specifically, this invention relates to a method for preparing super absorbent polymer exhibiting excellent absorption properties, in which extractable contents and fine particles generated are remarkably decreased.

FIG. 1

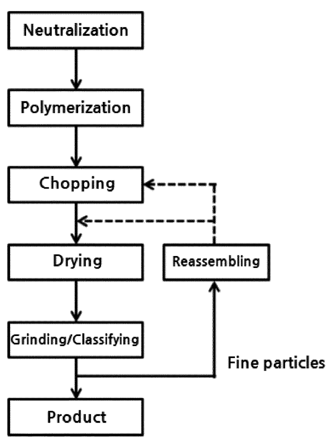


EP 4 253 451 A1

## Description

## BACKGROUND OF THE INVENTION

### (a) Field of the Invention

Cross-reference to Related Application

This application claims the benefit of Korean Patent Application No. 10-2021-0079644 filed on June 18, 2021 and Korean Patent Application No. 10-2022-0074251 filed on June 17, 2022 with the Korean Intellectual Property Office, the disclosures of which are herein incorporated by reference in their entirety.

This invention relates to a method for preparing super absorbent polymer and super absorbent polymer. More specifically, this invention relates to a method for preparing super absorbent polymer and super absorbent polymer exhibiting excellent absorption properties, in which extractable contents and generation of fine particles are remarkably decreased.

### (b) Description of the Related Art

Super absorbent polymer (SAP) is synthetic polymer material that can absorb moisture of 500 to 1000 times of self-weight, and is also named differently as super absorbency material (SAM), absorbent gel material (AGM), etc. according to developing companies. The super absorbent polymer began to be commercialized as sanitary items, and currently, it is being widely used as water-holding material for soil, water stop material for civil engineering and architecture, sheets for raising seedling, freshness preservatives in the field of food circulation, fomentation material, and the like.

Such super absorbent polymer is mainly used in the field of hygienic goods such as diapers, sanitary pads, and the like. In general, in the hygienic goods, the super absorbent polymer is included while being dispersed in pulp. However, recently, there are continued attempts to provide hygienic goods such as diapers with thinner thickness, and as a part of them, development of hygienic goods having reduced pulp content, or pulpless hygienic goods are being actively progressed.

As such, in the case of hygienic goods having reduced pulp content or pulpless hygienic goods, super absorbent polymer is included at relatively high rate, and thus, super absorbent polymer particles are inevitably included in multilayers in the hygienic goods. The super absorbent polymer should exhibit rapid absorption speed as well as high absorption capacity, so that the whole super absorbent polymer particles included in multilayers may efficiently absorb a large quantity of liquid such as urine.

Meanwhile, such super absorbent polymer is generally prepared through the steps of polymerizing monomers to prepare hydrogel polymer containing a large quantity of moisture, and drying such hydrogel polymer and grinding it to resin particles having desired particle diameters. However, in case a grinding process is conducted after drying hydrogel polymer as described above, a large quantity of fine particles may be generated to deteriorate the properties of the finally prepared super absorbent polymer.

And, in order to reuse such fine particles, commonly, fine particles are mixed with water and agglomerated to prepare fine particles reassembly, and then, fine particles reassembly prepared by drying/grinding/classification processes is introduced. However, due to water used, energy consumption increases during the drying process, and device load increases, thus lowering productivity of super absorbent polymer.

Thus, in order to fundamentally solve the problem, there is a continued demand for development of technology capable of preparing super absorbent polymer without generating fine particles.

## SUMMARY OF THE INVENTION

Thus, it is an object of the invention to provide a method for preparing super absorbent polymer, and super absorbent polymer having remarkably improved vortex time, and remarkably decreased fine particle generation during the process, and simultaneously, exhibiting excellent absorption properties, by preparing particles in the form of aggregated fine particles, to increase surface area.

In order to achieve the object, according to one embodiment of the invention, there is provided a method for preparing super absorbent polymer comprising steps of:

conducting polymerization of a monomer composition comprising water soluble ethylenically unsaturated monomers having acid groups, an internal crosslinking agent, and a polymerization initiator, to form a polymer in which the water soluble ethylenically unsaturated monomers having acid groups and the internal crosslinking agent are crosslinked (step 1);

neutralizing at least a part of the acid groups of the polymer (step 2);
micronizing the polymer in the presence of a surfactant (step 3);
drying the neutralized and micronized polymer, to prepare dried super absorbent polymer particles (step 4); and
grinding the dried super absorbent polymer particles to prepare super absorbent polymer particles (step 5).

And, according to another embodiment of the invention, there is provided a super absorbent polymer comprising polymer formed by crosslinking polymerization of water soluble ethylenically unsaturated monomers having acid groups and an internal crosslinking agent, at least a part of the acid groups of said polymer being neutralized, and comprising a surface crosslink layer formed on the polymer by additional crosslinking of the polymer by a surface crosslinking agent,

wherein a vortex time is 30 seconds or less, and
extractable contents measured after swelling for 1 hour according to EDANA method WSP 270.3, are 5 wt% or less.

According to the method for preparing super absorbent polymer of the invention, particles in the form of aggregated fine particles are realized to increase surface area, thus enabling preparation of super absorbent polymer having remarkably improved vortex time, and exhibiting excellent absorption properties.
And, by uniformly drying using moving type drying, and then, grinding, the amount of fine particles generated may be remarkably decreased during the preparation of super absorbent polymer.
And, the super absorbent polymer has high molecular weight, uniform particle diameter distribution and low extractable contents(EC), thus providing super absorbent polymer having excellent absorption properties such as centrifuge retention capacity and absorbency under pressure, permeability, rewet property and vortex time, and the like.

## BRIEF DESCRIPTION OF THE DRAWINGS

Fig. 1 is a flow diagram of the conventional preparation method of super absorbent polymer.

## DETAILED DESCRIPTION OF THE EMBODIMENTS

The terms used herein are only to explain specific embodiments, and are not intended to limit the invention. A singular expression includes a plural expression thereof, unless it is expressly stated or obvious from the context that such is not intended. As used herein, the terms "comprise", "equipped" or "have", etc. are intended to designate the existence of practiced characteristic, number, step, constructional element or combinations thereof, and they are not intended to preclude the possibility of existence or addition of one or more other characteristics, numbers, steps, constructional elements or combinations thereof.
Although various modifications can be made to the invention and the invention may have various forms, specific Examples will be illustrated and explained in detail below. However, it should be understood that these are not intended to limit the invention to specific disclosure, and that the invention includes all the modifications, equivalents or replacements thereof without departing from the spirit and technical scope of the invention.
Hereinafter, a method for preparing super absorbent polymer and super absorbent polymer according to specific embodiments of the invention will be explained in detail.
Before that, technical terms in the present specification are only for mentioning specific embodiments, and they are not intended to restrict the invention. A singular expression includes a plural expression thereof, unless it is expressly stated or obvious from the context that such is not intended.
According to one embodiment of the invention, there is provided a method for preparing super absorbent polymer comprising steps of:

conducting polymerization of a monomer composition comprising water soluble ethylenically unsaturated monomers having acid groups, an internal crosslinking agent, and a polymerization initiator, to form a polymer in which the water soluble ethylenically unsaturated monomers having acid groups and internal crosslinking agent are crosslinked (step 1);
neutralizing at least a part of the acid groups of the polymer (step 2);
micronizing the polymer in the presence of a surfactant (step 3);
drying the neutralized and micronized polymer, to prepare dried super absorbent polymer particles (step 4); and
grinding the dried super absorbent polymer particles to prepare super absorbent polymer particles (step 5).

As used herein, the term "polymer" means a polymerized state of water soluble ethylenically unsaturated monomers, and it may include those of all moisture content ranges or particle diameter ranges.
And, the term "super absorbent polymer" means crosslinked polymer or base resin powder consisting of super

absorbent polymer particles obtained by grinding of the crosslinked polymer, or is used to include the crosslinked polymer or base resin made appropriate for productization through additional process, for example, drying, grinding, classification, surface crosslinking, and the like.

And, the term "fine particles" mean particles having particle diameter less than 150 μm among the super absorbent polymer particles. The particle diameter of such polymer particles may be measured according to European Disposables and Nonwovens Association(EDANA) standard EDANA WSP 220.3 method.

And, the term "chopping" means cutting hydrogel polymer to small pieces of millimeter unit so as to increase drying efficiency, and is distinguished from grinding to micrometer or normal particle level.

And, the term "micronizing(micronization)" means grinding hydrogel polymer to particle diameter of tens to hundreds of micrometers, and is distinguished from "chopping".

Hydrogel polymer obtained by the polymerization reaction of acryl-based monomers is commercialized as super absorbent polymer powder product, through the processes of drying, grinding, classification, surface crosslinking, and the like. Recently, attempts to provide super absorbent polymer exhibiting more improved vortex time are being continuously made.

As most common method for increasing a vortex time, a method of forming a porous structure inside super absorbent polymer to increase the surface area of super absorbent polymer may be mentioned, and in order to increase the surface area of super absorbent polymer, a method of forming a porous structure in base resin powder by progressing a crosslinking polymerization using a blowing agent in a monomer composition is generally adopted.

However, due to the use of the blowing agent, properties of super absorbent polymer, for example, surface tension, permeability or bulk density, and the like are deteriorated, and generation of fine particles increases, and thus, there is a continued demand for development of technology capable of improving a vortex time of super absorbent polymer without using a blowing agent.

Meanwhile, conventionally, a super absorbent polymer is prepared by conducting crosslinking polymerization of water soluble ethylenically unsaturated monomers having acid groups, of which at least a part are neutralized, in the presence of an internal crosslinking agent and a polymerization initiator, to form hydrogel polymer, and drying the hydrogel polymer, and then, grinding it to desired particle diameter, wherein a chopping process for cutting the hydrogel polymer to particles of a few millimeter size is commonly progressed before the drying process, so as to facilitate drying of the hydrogel polymer and increase the efficiency of the grinding process. However, during such a chopping process, due to adhesion of hydrogel polymer, the hydrogel polymer cannot be ground to micro size particle level, but becomes aggregated gel. If such hydrogel polymer in the form of aggregated gel is dried, a plate type dried body may be formed, and in order to grind it to micro size particle level, a multistage grinding process should be conducted to lower the adhesion of polymer, and during such a process, a large quantity of fine particles are generated.

Specifically, a flow diagram of the conventional preparation method of super absorbent polymer is shown in Fig. 1. Referring to Fig. 1, conventionally, super absorbent polymer was prepared by a method comprising the following steps:

(neutralization) neutralizing at least part of the acid groups of water soluble ethylenically unsaturated monomers;
(polymerization) conducting crosslinking polymerization of water soluble ethylenically unsaturated monomers having acid groups, of which at least a part are neutralized, in the presence of an internal crosslinking agent and a polymerization initiator, to form hydrogel polymer;
(chopping) chopping the hydrogel polymer;
(drying) drying the chopped hydrogel polymer; and
(grinding/classifying) grinding the dried polymer, and then, classifying into normal particles and fine particles.

As explained above, the chopped hydrogel polymer has an aggregated gel shape of about 1 cm to 10 cm, and such chopped hydrogel polymer is stacked on a belt of which bottom consists of a perforated plate, and dried by hot air supplied from the upper part and lower part. Since the polymer dried by the above drying method exhibits a plate shape instead of a particle shape, the steps of grinding and classification comprise coarsely grinding and classifying such that prepared particles become normal particles, namely, particles having particle diameters of 150 μm to 850 μm, and then, finely grinding and classifying again. According to this method, the amount of fine particles separated in the final classification step was as large as about 20 wt% to about 30 wt%, based on the total weight of the finally prepared super absorbent polymer, and thus, separated fine particles were mixed with an appropriate amount of water and reassembled, and then, introduced in the chopping step or before drying for reuse.

However, when the fine particles reassembled body mixed with water was reintroduced in the grinding or drying process for reuse, equipment load and/or energy consumption increase was caused, and due to remaining fine particles that had failed to be classified, property deterioration of super absorbent polymer was caused.

Thus, the inventors of the invention figured out that the amount of fine particles generated has a large influence on the grinding process in the conventional preparation method, and found out that by introducing a surfactant and a

neutralization agent in the grinding process of polymer to post-neutralize polymer, and grinding more finely than before, namely, micronizing, and simultaneously, controlling aggregation, thus preparing particles in the form of aggregated fine particles, the amount of fine particles generated during the preparation process may be remarkably reduced.

Meanwhile, in order to lower adhesion of hydrogel polymer during the chopping process, a method of introducing a surfactant has been suggested. However, in case a surfactant is introduced during the chopping process, due to high moisture content of hydrogel polymer, the surfactant does not exist at the interface of the hydrogel polymer, but penetrates inside the hydrogel polymer, and thus, the surfactant may not properly perform the function.

Since chopped particles are formed as particles of a few millimeters or a few centimeters compared to the polymer before chopped, surface area may increase to some degree, but it is difficult to expect effective improvement in vortex time. Thus, in order to improve vortex time, a method of increasing surface area by further increasing a mechanical force and kneading in the chopping step may be considered, but in this case, due to unique stickiness of polymer, aggregation may be excessively generated, and amorphous single particles with uneven particle surface may be formed after chopping, drying and grinding, and due to excessive kneading or mashing, extractable contents may increase to the contrary.

As the result of repeated studies for solving these problems, it was confirmed that if polymerization is not conducted while the acid groups of water soluble ethylenically unsaturated monomers are neutralized as in the conventional preparation method of super absorbent polymer, but polymerization is first conducted while the acid groups are not neutralized, to form polymer, and the polymer is micronized in the presence of a surfactant and then the acid groups of the polymer are neutralized, or the acid groups of the polymer are neutralized and then the polymer is micronized in the presence of a surfactant, or the acid groups existing in the polymer are neutralized simultaneously with micronization, the surfactant may exist on the surface of the polymer in large quantities, and sufficiently perform functions for lowering the high adhesion of polymer to prevent excessive aggregation of the polymer and controlling the aggregated state to a desired level.

Accordingly, since polymer is prepared as secondary particles in which primary particles are aggregated, and then, grinding and drying process are progressed under milder conditions, the amount of fine particles generated during the process may be remarkably reduced.

And, in case polymer is micronized in the presence of the surfactant, hydrophobic functional group parts included in the surfactant give hydrophobicity to the surface of ground super absorbent polymer particles, thus relieving frictional force between particles to increase apparent density of super absorbent polymer, and simultaneously, hydrophilic functional group parts included in the surfactant also bind to super absorbent polymer particles to prevent lowering of surface tension of the polymer. Thus, super absorbent polymer prepared according to the above explained preparation method may exhibit equivalent surface tension but higher apparent density, compared to polymer without using a surfactant.

And, if polymerization is first conducted under non-neutralized state to form polymer and then the acid groups existing in the polymer are neutralized, polymer of longer chain may be formed, thus achieving the effect for reducing extractable contents existing in non-crosslinked state due to incomplete crosslinking.

Since the extractable contents tend to be easily eluted when super absorbent polymer contacts liquid, in case extractable contents are high, most of eluted extractable contents remain on the surface of super absorbent polymer and make super absorbent polymer sticky, thus causing decrease in permeability. Thus, in terms of permeability, it is important to maintain the extractable contents low.

According to one embodiment of the invention, by conducting polymerization under non-neutralized state, extractable contents decrease, thereby improving permeability of super absorbent polymer.

And, the super absorbent polymer prepared according to one embodiment of the invention may have uniform particle diameter distribution, thereby providing super absorbent polymer having excellent absorption properties such as centrifuge retention capacity and absorbency under pressure, rewet property, and vortex time, and the like.

Hereinafter, a method for preparing super absorbent polymer of one embodiment will be explained in more detail according to steps.

### Step 1 : Polymerization step

First, a monomer composition comprising water soluble ethylenically unsaturated monomers having acid groups, an internal crosslinking agent, and a polymerization initiator is subjected to polymerization, to form polymer in which the water soluble ethylenically unsaturated monomers having acid groups and internal crosslinking agent are crosslinked.

This step may consist of mixing the water soluble ethylenically unsaturated monomers having acid groups, internal crosslinking agent and polymerization initiator to prepare a monomer composition, and polymerizing the monomer composition to form polymer.

The water soluble ethylenically unsaturated monomers may be any monomers commonly used in the preparation of super absorbent polymer. As non-limiting examples, the water soluble ethylenically unsaturated monomers may be a compound represented by the following Chemical Formula 1:

[Chemical Formula 1] R-COOM'

In the Chemical Formula 1,

R is a C2-5 alkyl group comprising unsaturated bond,
M' is a hydrogen atom, monovalent or divalent metal, an ammonium group or an organic amine salt.

Preferably, the monomer may be one or more selected from the group consisting of methacrylic acid, and monovalent (alkali) metal salt, divalent metal salt, and ammonium salt and organic amine salt of the acid.

As such, in case methacrylic acid and/or a salt thereof is used as water soluble ethylenically unsaturated monomers, super absorbent polymer with improved absorption property may be obtained. Besides, as the monomers, maleic anhydride, fumaric acid, crotonic acid, itaconic acid, 2-acryloylethane sulfonic acid, 2-methacryloylethane sulfonic acid, 2-methacryloylpropane sulfonic acid, or 2-methacrylamide-2-methylpropane sulfonic acid, methacrylamide, N-substituted(meth)acrylate, 2-hydroxyethyl methacrylate, 2-hydroxypropyl methacrylate, methoxy polyethylene glycol methacrylate, polyethylene glycol methacrylate, (N,N)-dimethylaminoethyl methacrylate, (N,N)-dimethylaminopropyl methacrylamide, and the like may be used.

Wherein, the water soluble ethylenically unsaturated monomers have acid groups. As explained above, in the conventional preparation method of super absorbent polymer, monomers in which at least a part of the acid groups had been neutralized by a neutralization agent were subjected to crosslinking polymerization to form hydrogel polymer. Specifically, in the step of mixing the water soluble ethylenically unsaturated monomers having acid groups, internal crosslinking agent, polymerization initiator and neutralization agent, at least a part of the acid groups of the water soluble ethylenically unsaturated monomers were neutralized.

However, according to one embodiment of the invention, while the acid groups of the water soluble ethylenically unsaturated monomers are not neutralized, polymerization is first conducted to form polymer.

The water soluble ethylenically unsaturated monomers (for example, acrylic acid), of which acid groups are not neutralized, are liquid and have high miscibility with a solvent(water), and thus, exist in the state of a mixed solution in the monomer composition. However, water soluble ethylenically unsaturated monomers, of which acid groups are neutralized, are solid at room temperature, and have different solubilities according to the temperature of a solvent(water), and the solubility is lower as the temperature is lower.

As such, the water soluble ethylenically unsaturated monomers(for example, acrylic acid), of which acid groups are not neutralized, have higher solubility to or miscibility with a solvent(water) than the monomers of which acid groups are neutralized, and are not precipitated even at low temperature, and thus, are favorable for polymerization for a long time at low temperature. Thus, by conducting polymerization for a long time using the water soluble ethylenically unsaturated monomers(for example, acrylic acid) of which acid groups are not neutralized, polymer having higher molecular weight and uniform molecular weight distribution may be stably formed.

And, polymer of longer chain can be formed, thus achieving the effect for reducing extractable contents that exist in non-crosslinked state due to incomplete polymerization or crosslinking.

And, as such, if polymerization is first conducted while the acid groups of the monomers are not neutralized, to form polymer, and the polymer is micronized in the presence of a surfactant after neutralization, or the polymer is micronized in the presence of a surfactant and then the acid groups are neutralized, or the acid groups existing in the polymer are neutralized simultaneously with micronization, the surfactant may exist on the surface of the polymer in large quantities, and sufficiently perform a function for lowering adhesion of polymer.

In the monomer composition, the concentration of the water soluble ethylenically unsaturated monomers may be appropriately controlled considering polymerization time and reaction conditions, and the like, and it may be controlled to about 20 to about 60 wt%, or about 20 to about 40 wt%.

As used herein the term 'internal crosslinking agent' is used to distinguish from a surface crosslinking agent for crosslinking the surface of super absorbent polymer particles described later, and it functions for introducing crosslinks between unsaturated bonds of the above explained water soluble ethylenically unsaturated monomers, to form polymer comprising a crosslink structure.

In this step, crosslinking is progressed without distinction of a surface and inside, but in case the surface crosslinking process of super absorbent polymer is progressed as described later, the surface of the finally prepared super absorbent polymer particles may comprise a structure newly crosslinked by the surface crosslinking agent, and the inside of the super absorbent polymer particles may maintain the structure crosslinked by the internal crosslinking agent.

According to one embodiment of the invention, as the internal crosslinking agent, one or more of multifunctional acrylate-based compounds, multifunctional allyl-based compounds, or multifunctional vinyl-based compounds may be included.

As non-limiting examples of the multifunctional acrylate-based compounds, ethyleneglycol dimethacrylate, diethyleneglycol dimethacrylate, triethyleneglycol dimethacrylate, tetraethyleneglycol dimethacrylate, polyethyleneglycol dimethacrylate, propyleneglycol dimethacrylate, tripropyleneglycol dimethacrylate, polypropyleneglycol dimethacrylate, butanediol dimethacrylate, butyleneglycol dimethacrylate, hexanediol dimethacrylate, pentaerythritol dimethacrylate, pentaerythritol tri(meth)acrylate, pentaerythritol tetramethacrylate, dipentaerythritol dimethacrylate, dipentaerythritol trimethacrylate, dipentaerythritol tetra(meth)acrylate, dipentaerythritol pentamethacrylate, trimethylolpropane dimethacrylate, trimethylolpropane trimethacrylate, glycerin dimethacrylate, and glycerin trimethacrylate, and the like may be mentioned, and one of them or mixture of two or more kinds of them may be used.

As non-limiting examples of the multifunctional allyl-based compounds, ethyleneglycol diallyl ether, diethyleneglycol diallyl ether, triethyleneglycol diallyl ether, tetraethyleneglycol diallyl ether, polyethyleneglycol diallyl ether, propyleneglycol diallyl ether, tripropyleneglycol diallyl ether, polypropyleneglycol diallyl ether, butanediol diallyl ether, butyleneglycol diallyl ether, hexanediol diallyl ether, pentaerythritol diallyl ether, pentaerythritol triallyl ether, pentaerythritol tetraallyl ether, dipentaerythritol diallyl ether, dipentaerythritol triallyl ether, dipentaerythritol tetraallyl ether, dipentaerythritol pentaallyl ether, trimethylolpropane diallyl ether, trimethylolpropane triallyl ether, glycerin diallyl ether, and glycerin triallyl ether, and the like may be mentioned, and one of them or mixture of two or more kinds of them may be used.

As non-limiting examples of the multifunctional vinyl-based compounds, ethyleneglycol divinyl ether, diethyleneglycol divinyl ether, triethyleneglycol divinyl ether, tetraethyleneglycol divinyl ether, polyethyleneglycol divinyl ether, propyleneglycol divinyl ether, tripropyleneglycol divinyl ether, polypropyleneglycol divinyl ether, butanediol divinyl ether, butyleneglycol divinyl ether, hexanediol divinyl ether, pentaerythritol divinyl ether, pentaerythritol trivinyl ether, pentaerythritol tetravinyl ether, dipentaerythritol divinyl ether, dipentaerythritol trivinyl ether, dipentaerythritol tetravinyl ether, dipentaerythritol pentavinyl ether, trimethylolpropane divinyl ether, trimethylolpropane trivinyl ether, glycerin divinyl ether, and glycerin trivinyl ether, and the like may be mentioned, and one of them or mixture of two or more kinds of them may be used. Preferably, pentaerythritol triallyl ether may be used.

In the above explained multifunctional allyl-based compounds, or multifunctional vinyl-based compounds, two or more unsaturated groups included in the molecule respectively bind to the unsaturated bonds of water soluble ethylenically unsaturated monomers, or unsaturated bonds of other internal crosslinking agents, thus forming a crosslink structure during the polymerization process, and unlike acrylate-based compounds comprising an ester bond(-(C=O)O-) in the molecule, the crosslink may be more stably maintained during the neutralization process after the polymerization reaction.

Thus, gel strength of prepared super absorbent polymer may increase, process stability during a discharge process after polymerization may increase, and extractable contents may be minimized.

The crosslinking polymerization of the water soluble ethylenically unsaturated monomers in the presence of such an internal crosslinking agent may be conducted in the presence of a polymerization initiator, a thickener if necessary, a plasticizer, a preservative, an antioxidant, and the like.

In the monomer composition, such an internal crosslinking agent may be used in an amount of 0.01 to 5 parts by weight, based on 100 parts by weight of the water soluble ethylenically unsaturated monomers. For example, the internal crosslinking agent may be used in an amount of 0.01 parts by weight or more, or 0.05 parts by weight or more, or 0.1 parts by weight or more, and 5 parts by weight or less, or 3 parts by weight or less, or 2 parts by weight or less, or 1 part by weight or less, or 0.7 parts by weight or less, based on 100 parts by weight of the water soluble ethylenically unsaturated monomers. If the content of the internal crosslinking agent is too low, crosslinking may not sufficiently occur, and thus, it may be difficult to realize strength above an optimum level, and if the content of the internal crosslinking agent is too high, the internal crosslinking density may increase, and thus, it may be difficult to realize desired centrifuge retention capacity.

The polymer formed using such an internal crosslinking agent has a three-dimensional network structure in which main chains formed by polymerization of the water soluble ethylenically unsaturated monomers are crosslinked by the internal crosslinking agent. As such, in case polymer has a three-dimensional network structure, compared to a two-dimensional linear structure that is not additionally crosslinked by an internal crosslinking agent, the properties of super absorbent polymer such as centrifuge retention capacity and absorbency under pressure may be remarkably improved.

According to one embodiment of the invention, the step of conducting polymerization of the monomer composition to form polymer may be conducted in a batch type reactor.

In the common preparation method of super absorbent polymer, the polymerization method is largely divided into thermal polymerization and photopolymerization according to polymerization energy source, and commonly, thermal polymerization may be progressed in a reactor equipped with a stirring axis such as a kneader, and photopolymerization may be progressed in a reactor equipped with a movable conveyor belt or in a flat-bottom container.

Meanwhile, by such a polymerization method, generally, polymer having modest molecular weight and wide molecular weight distribution is formed according to short polymerization reaction time (for example, 1 hour or less).

Meanwhile, in case photopolymerization is progressed in a reactor equipped with a movable conveyor belt or

in a flat bottom container, hydrogel polymer sheet having a width of the belt is commonly obtained, and the thickness of the polymer sheet may vary according to the concentration of introduced monomer composition and introduction speed or introduction amount, but commonly, it may be about 0.5 to about 5cm.

However, in case the monomer composition is supplied such that the thickness of the polymer sheet becomes too thin, production efficiency may be low, and in case the thickness of polymer sheet is increased for productivity, a polymerization reaction may not uniformly occur over the whole thickness, and thus, it may be difficult to form high quality polymer.

And, since polymerization in the reactor equipped with a stirring axis and conveyor belt is continuously achieved while polymerization product moves and new monomer composition is fed to the reactor, polymers having different polymerization rates may be mixed, and thus, polymerization may not uniformly occur over the whole monomer composition, thus causing property deterioration.

However, according to one embodiment of the invention, by progressing fixed-bed type polymerization in a batch type reactor, there is little concern about mixing of polymers having different polymerization rates, and thus, polymer having uniform quality may be obtained.

And, the polymerization step is conducted in a batch type reactor having a predetermined volume, and a polymerization reaction is conducted for a longer time than the case of conducting continuous polymerization in a reactor equipped with a conveyor belt, for example, for 3 hours or more. Despite the long polymerization reaction time, since polymerization is conducted for non-neutralized water soluble ethylenically unsaturated monomers, even if polymerization is conducted for a long time, monomers may not be easily precipitated, thus favorable for polymerization for a long time.

Meanwhile, the polymerization in a batch type reactor of the invention uses thermal polymerization, and thus, uses a thermal polymerization initiator as the polymerization initiator.

As the thermal polymerization initiator, one or more selected from the group consisting of persulfate-based initiators, azo-based initiators, hydrogen peroxide and ascorbic acid may be used. Specifically, as the examples of the persulfate-based initiators, sodium persulfate($Na_2S_2O_8$), potassium persulfate($K_2S_2O_8$), ammonium persulfate($(NH_4)_2S_2O_8$), and the like, may be mentioned, and as the examples of the azo-based initiators, 2,2-azobis(2-amidinopropane) dihydrochloride, 2,2-azobis-(N,N-dimethylene)isobutyramidine dihydrochloride, 2-(carbamoylazo)isobutylonitrile, 2,2-azobis[2-(2-imidazolin-2-yl)propane] dihydrochloride, 4,4-azobis-(4-cyanovaleric acid), and the like may be mentioned. More various thermal polymerization initiators are stated in Odian, 'Principle of polymerization(Wiley, 1981)', p203, and are not limited to the above examples.

Such a polymerization initiator may be used in an amount of 2 parts by weight or less, based on 100 parts by weight of the water soluble ethylenically unsaturated monomers. Namely, if the concentration of the polymerization initiator is too low, polymerization speed may become slow, and remaining monomers may be extracted in large quantities in the final product. To the contrary, if the concentration of the polymerization initiator is higher than the above range, polymer chains making up a network may become short, and thus, extractable contents may increase, and absorbency under pressure may decrease, thus deteriorating properties of polymer.

Meanwhile, according to one embodiment of the invention, polymerization may be initiated by introducing the initiator together with a reducing agent forming a redox couple with the initiator.

Specifically, the initiator and reducing agent, when introduced in a polymerization solution, react with each other to form radicals.

The radicals formed react with monomers, and since the oxidation-reduction reaction between the initiator and reducing agent is highly reactive, even if small amounts of initiator and reducing agent are introduced, polymerization may be initiated, thus enabling low temperature polymerization without need to increase process temperature, and minimizing property change of the polymer solution.

The polymerization using oxidation-reduction reaction may smoothly occur at a temperature around a room temperature(25°C) or lower temperature. For example, the polymerization reaction may be conducted at a temperature of 5°C or more and 25°C or less, or 5°C or more and 20°C or less.

In one embodiment of the invention, in case a persulfate-based initiator is used as the initiator, as the reducing agent, one or more selected from the group consisting of sodium metabisulfite($Na_2S_2O_5$); tetramethyl ethylenediamine(TMEDA); a mixture of iron (II) sulfate and EDTA ($FeSO_4$/EDTA); sodium formaldehyde sulfoxylate; and disodium 2-hydroxy-2-sulfinoacteate may be used.

For example, potassium persulfate may be used as the initiator, and disodium 2-hydroxy-2-sulfinoacetate may be used as the reducing agent; ammonium persulfate may be used as the initiator, and tetramethyl ethylenediamine may be used as the reducing agent; or sodium persulfate may be used as the initiator, and sodium formaldehyde sulfoxylate may be used as the reducing agent.

In another embodiment of the invention, in case a hydrogen peroxide-based initiator is used as the initiator, the reducing agent may be one or more selected from the group consisting of ascorbic acid; sucrose; sodium sulfite($Na_2SO_3$) sodium metabisulfite($Na_2S_2O_5$); tetramethyl ethylenediamine(TMEDA); a mixture of iron (II) sulfate and EDTA($FeSO_4$/EDTA); sodium formaldehyde sulfoxylate; disodium 2-hydroxy-2-sulfinoacteate; and disodium 2-hydroxy-2-sulfoacteate.

The monomer composition may further comprise additives such as a thickener, a plasticizer, a preservative, an antioxidant, and the like, as necessary.

And, the monomer composition comprising the monomers may be a solution state dissolved in a solvent, for example, water, and the solid content in the monomer composition solution, namely, the concentration of the monomers, internal crosslinking agent and polymerization initiator may be appropriately controlled considering polymerization time and reaction conditions, and the like. For example, the solid content in the monomer composition may be 10 to 80 wt%, or 15 to 60 wt%, or 30 to 50 wt%.

Wherein, a solvent that can be used is not limited as long as it can dissolve the above explained components, and for example, one or combination of more selected from water, ethanol, ethyleneglycol, diethyleneglycol, triethyleneglycol, 1,4-butanediol, propyleneglycol, ethyleneglycol monobutyl ether, propyleneglycol monomethyl ether, propyleneglycol monomethyl ether acetate, methylethylketone, acetone, methylamylketone, cyclohexanone, cyclopentanone, diethyleneglycol monomethyl ether, diethyleneglycol ethyl ether, toluene, xylene, butyrolactone, carbitol, methyl celosolve acetate and N,N-dimethylacetamide, and the like may be used.

By such a method, as non-neutralized ethylenically unsaturated monomers are polymerized, polymer having high molecular weight and uniform molecular weight distribution may be formed, and extractable contents may be reduced.

The polymer obtained by such a method may be in the state of hydrogel polymer, and have a moisture content 30 to 80 wt%. For example, the moisture content of the polymer may be 30 wt% or more, or 45 wt% or more, or 50 wt% or more, and 80 wt% or less, or 70 wt% or less, or 60 wt% or less.

If the moisture content of the polymer is too low, it may be difficult to secure an appropriate surface area in the subsequent grinding step, and thus, the polymer may not be effectively ground, and if the moisture content of the polymer is too high, a pressure in the subsequent grinding step may increase, and thus, it may be difficult to grind to a desired particle size.

Meanwhile, throughout the specification, a "moisture content" is the content of moisture occupied, based on the total polymer weight, and it means a value obtained by subtracting the weight of dried polymer from the weight of polymer. Specifically, it is calculated by measuring weight decrease according to evaporation of moisture in the polymer while increasing the temperature of polymer in the state of crumb to dry through infrared heating. Wherein, a temperature is increased from a room temperature to about 180°C, and then, maintained at 180°C, and the total drying time is set to 40 minutes including 5 minutes of the temperature rise step.

**Step 2: Neutralization step and Step 3: Micronization step**

Next, a step of neutralizing at least a part of the acid groups of the polymer is conducted (step 2).

Wherein, as a neutralization agent, basic material such as sodium hydroxide, potassium hydroxide, ammonium hydroxide, and the like capable of neutralizing acid groups may be used.

And, a neutralization degree, which refers to a degree to which the acid groups included in the polymer are neutralized by the neutralization agent, may be 50 to 90 mol%, or, 60 to 85 mol%, or 65 to 85 mol%, or 65 to 75 mol%. The range of the neutralization degree may vary according to the final properties, but if the neutralization degree is too high, absorption capability of super absorbent polymer may decrease, and due to excessively low concentration of carboxylic groups on the surface of particles, it may be difficult to sufficiently conduct surface crosslinking in the subsequent process, and thus, absorbency under pressure or permeability may decrease. To the contrary, if the neutralization degree is too low, absorption force of polymer may significantly decrease, and the polymer may exhibit rubber-like property which is difficult to handle.

Simultaneously with the step 2, or before or after conducting the step 2, in the presence of a surfactant, a step of micronizing the polymer is conducted (step 3).

This step is a step of micronizing the polymer in the presence of a surfactant, wherein the polymer is not chopped to millimeter size, but finely cut to tens to hundreds of micrometers and simultaneously aggregated. Namely, by giving appropriate adhesion to polymer, secondary aggregated particles formed by aggregation of primary particles finely cut to tens to hundreds of micrometer size are prepared. The secondary aggregated particles prepared by such a step, i.e., hydrated super absorbent polymer particles, have normal particle size distribution, but have significantly increased surface area, thus remarkably improving vortex time.

As such, after mixing the polymer with a surfactant, by micronizing the polymer in the presence of the surfactant, hydrated super absorbent polymer particles in the form of secondary aggregated particles formed by fine cutting and aggregation while super absorbent polymer particles and surfactant are mixed, may be prepared.

Wherein, "hydrated super absorbent polymer particles" are particles having moisture content of about 30 wt% or more, and since they are obtained by fine cutting and aggregation of polymer in the shape of particles without a drying process, they may have moisture content of 30 to 80 wt% like the polymer.

According to one embodiment of the invention, as the surfactant, a compound represented by the following

Chemical Formula 2 or a salt thereof may be used, but the invention is not limited thereto:

[Chemical Formula 2]

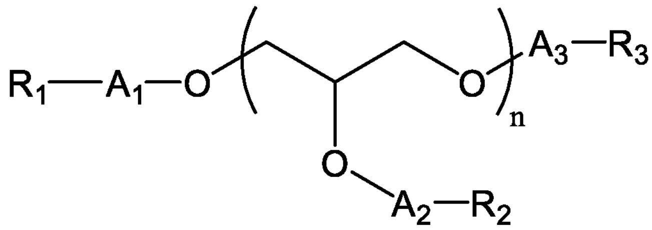

in the Chemical Formula 2,

$A_1$, $A_2$ and $A_3$ are each independently, a single bond, carbonyl,

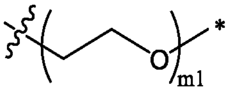

,

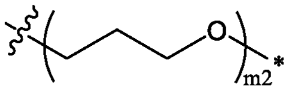

or

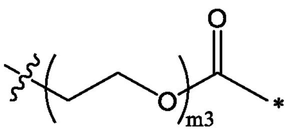

,

provided that one or more of them are carbonyl or

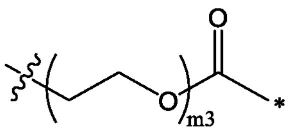

, wherein m1, m2 and m3 are each independently, n integer of 1 to 8, each

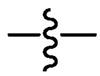

is connected to adjacent oxygen atom, and each



is connected to adjacent $R_1$, $R_2$ and $R_3$,

$R_1$, $R_2$ and $R_3$ are each independently, hydrogen, C6-18 linear or branched alkyl or C6-18 linear or branched alkenyl, and

n is an integer of 1 to 9.

The surfactant is mixed with polymer and added such that the micronization step may be easily achieved without aggregation.

The surfactant represented by the Chemical Formula 2 is a non-ionic surfactant, and has excellent surface adsorption capability even with non-neutralized polymer by hydrogen bonding force, and thus, it suitable for realization

of aimed aggregation control effect. To the contrary, in the case of anionic surfactant, if it is mixed with polymer neutralized with a neutralization agent such as NaOH, $Na_2SO_4$, and the like, it may be adsorbed by Na+ ions to the carboxylic group substituent of polymer, and if it is mixed with non-neutralized polymer, due to competition of the carboxylic group substituent of polymer with anion, adsorption efficiency to polymer may be relatively degraded.

Specifically, in the surfactant represented by the Chemical Formula 2, hydrophobic functional groups are end functional groups $R_1$, $R_2$, $R_3$ (if not hydrogen), and hydrophilic functional groups include a part derived from glycerol in the chain, and hydroxyl groups at the end(in case $A_n$ is a single bond, and simultaneously, $R_n$ is hydrogen, n=1~3), wherein the glycerol-derived part and the end hydroxyl groups are hydrophilic functional groups and perform a function for improving adsorption capability to polymer surface. Thus, aggregation of super absorbent polymer particles may be effectively inhibited.

In the Chemical Formula 2, hydrophobic functional groups $R_1$, $R_2$, $R_3$(if not hydrogen) are each independently, C6-18 linear or branched alkyl or C6-18 linear or branched alkenyl. Wherein, in case $R_1$, $R_2$, $R_3$(not hydrogen) are alkyl or alkenyl having a carbon number less than 6, due to short chain length, aggregation of ground particles may not be effectively controlled, and in case $R_1$, $R_2$, $R_3$(not hydrogen) are alkyl or alkenyl having a carbon number greater than 18, mobility of the surfactant may decrease, and thus, it may not be effectively mixed with polymer, and due to increase in surfactant cost, the unit cost of a composition may increase.

Preferably, $R_1$, $R_2$, $R_3$ may be hydrogen, or in case it is C6-18 linear or branched alkyl, it may be 2-methylhexyl, n-heptyl, 2-methylheptyl, n-octyl, n-nonyl, n-decanyl, n-undecanyl, n-dodecanyl, n-tridecanyl, n-tetradecanyl, n-pentadecanyl, n-hexadecanyl, n-heptadecanyl, or n-octadecanyl, or in case it is C6-18 linear or branched alkenyl, it may be 2-hexenyl, 2-heptenyl, 2-octenyl, 2-nonenyl, 2-decenyl, 2-undecenyl, 2-dodecenyl, 2-tridecenyl, 2-tetradecenyl, 2-pentadecenyl, 2-hexadecenyl, 2-heptadecenyl, or 2-octadecenyl.

The surfactant may be selected from compounds represented by the following Chemical Formula 2-1 to Chemical Formula 2-14:

[Chemical Formula 2-1]

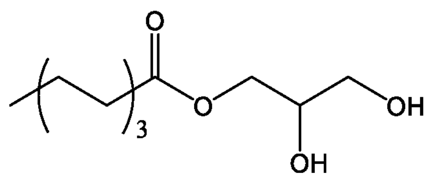

[Chemical Formula 2-2]

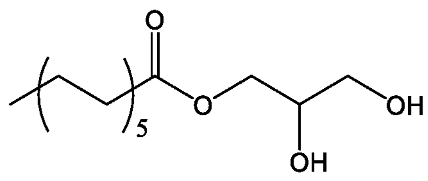

[Chemical Formula 2-3]

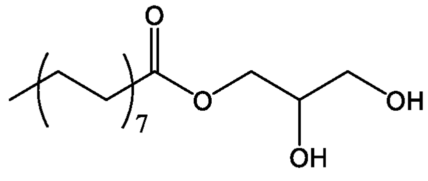

[Chemical Formula 2-4]

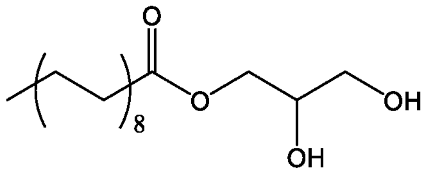

[Chemical Formula 2-5]

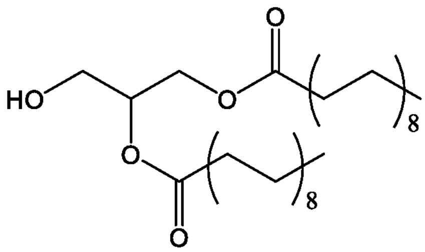

[Chemical Formula 2-6]

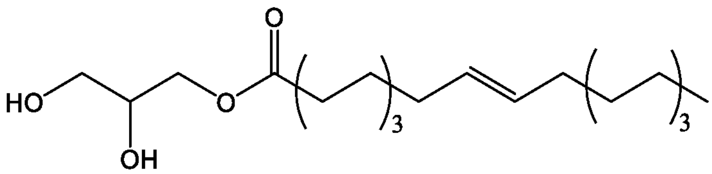

[Chemical Formula 2-7]

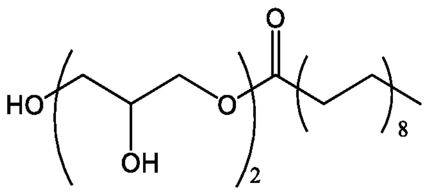

[Chemical Formula 2-8]

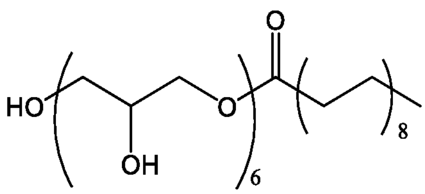

[Chemical Formula 2-9]

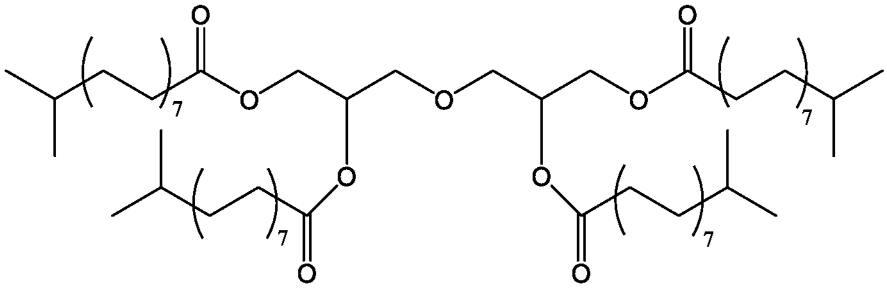

[Chemical Formula 2-10]

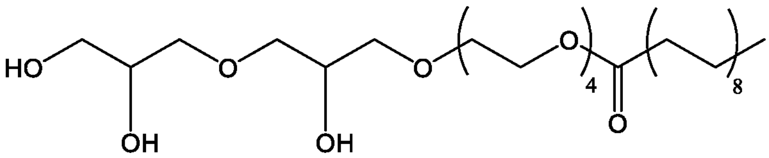

[Chemical Formula 2-11]

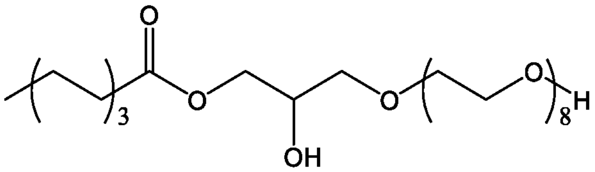

[Chemical Formula 2-12]

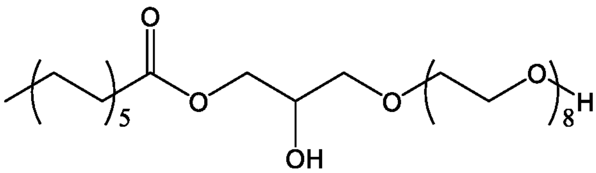

[Chemical Formula 2-13]

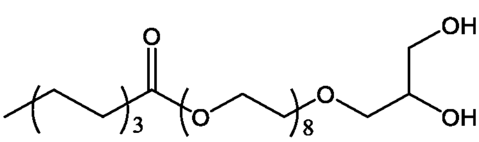

[Chemical Formula 2-14]

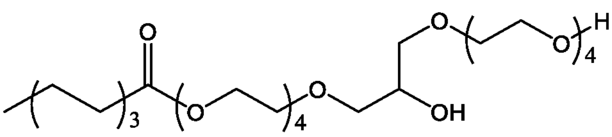

Meanwhile, the surfactant may be used in an amount of 0.01 to 10 parts by weight, based on 100 parts by weight of the polymer. If the amount of the surfactant used is too small, it may not be uniformly adsorbed on polymer surface, and thus, reaggregation of particles may be generated after grinding, and if the amount of the surfactant used is too large, the properties of the finally prepared super absorbent polymer may be deteriorated. For example, the surfactant may be used in an amount of 0.01 parts by weight or more, 0.015 parts by weight or more, or 0.1 parts by weight or more, and 5 parts by weight or less, 3 parts by weight or less, 2 parts by weight or less, or 1 part by weight or less, based on 100 parts by weight of the polymer.

A method for mixing such a surfactant with polymer is not specifically limited as long as it can uniformly mix them. Specifically, the surfactant may be dry mixed, or it may be dissolved in a solvent and then mixed in a solution state, or it may be molten and then mixed.

For example, the surfactant may be mixed in the state of a solution dissolved in a solvent. Wherein, as the solvent, inorganic solvents or organic solvents may be used without limitations, but considering easiness of a drying process and cost of solvent recovery system, water is most appropriate. And, the surfactant and polymer may be put in a reactor and mixed, or polymer may be put in a mixer and the solution may be sprayed, or polymer and the solution may be continuously supplied to a continuously operated mixer and mixed, and the like.

Meanwhile, according to one embodiment of the invention, the step of neutralizing at least a part of the acid groups of the polymer (step 2), and the step of micronizing the polymer in the presence of a surfactant (step 3) may be sequentially, alternately or simultaneously conducted.

Namely, a neutralization agent may be introduced in polymer to neutralize the acid groups, and then, a surfactant may be introduced in the neutralized polymer and the polymer mixed with the surfactant may be micronized; or a neutralization agent and a surfactant may be simultaneously introduced in polymer to conduct neutralization and micronization of polymer. Alternatively, a surfactant may be introduced first, and a neutralization agent may be introduced later. Alternatively, a neutralization agent and a surfactant may be alternately introduced. Alternatively, a surfactant may be introduced first for micronization, and then, a neutralization agent may be introduced for neutralization, and a surfactant may be additionally introduced in the neutralized hydrogel polymer to additionally conduct a micronization process.

Meanwhile, for uniform neutralization over the whole polymer, it may be preferable to set a regular time difference between the introduction of the neutralization agent and the micronization process.

At least a part or significant amount of the surfactant may exist on the surfaces of the hydrated super absorbent polymer particles.

Wherein, the description "the surfactant exists on the surfaces of hydrated super absorbent polymer particles" means that at least a part or significant amount of the surfactant is adsorbed or bonded to the surfaces of the hydrated super absorbent polymer particles. Specifically, the surfactant may be physically or chemically adsorbed to the surface of the super absorbent polymer. More specifically, the hydrophilic functional groups of the surfactant may be physically adsorbed to the hydrophilic parts of the super absorbent polymer surface by intermolecular force such as dipole-dipole interaction. As such, the hydrophilic parts of the surfactant are physically adsorbed to the surface of the super absorbent polymer particles to cover the surface, and the hydrophobic parts of the surfactant are not adsorbed to the surface of polymer particles, and thus, polymer particles may be coated with the surfactant in the form of a micelle structure. This is because the surfactant is not introduced during the polymerization process of the water soluble ethylenically unsaturated monomers, but introduced in the micronizatoin step after formation of polymer, and compared to the case wherein the surfactant is introduced during the polymerization process and exists inside the polymer, a function as a surfactant may be fully performed, and since grinding and aggregation simultaneously occur, particles having large surface area may be obtained in the form of aggregated fine particles.

According to one embodiment of the invention, the step of micronizing the polymer to prepare hydrated super absorbent polymer may be conducted two or more times.

According to one embodiment of the invention, the micronizing step may be conducted by a micronizing apparatus, and the micronizing apparatus may comprise: a body part comprising a transfer space where polymer is transferred inside; a screw member that is rotatably installed inside the transfer space to move polymer; a driving motor providing rotation force to the screw member; a cutter member that is installed in the body part to grind the polymer; and a perforated plate discharging the polymer ground by the cutter member outside the body part, in which plural holes are formed. Wherein, the size of holes equipped in the perforated plate of the micronizing apparatus may be 1 mm to 20 mm, or 5 mm to 15 mm, or 5 mm to 12 mm.

As such, in case polymer mixed with the surfactant is micronized while controlling aggregation using a micronizing apparatus, smaller particle size distribution may be realized, and the subsequent drying and grinding processes may be conducted under milder conditions, thereby preventing generation of fine particles and simultaneously improving the properties of super absorbent polymer.

**Step 4: Drying step**

Next, a step of drying the hydrated super absorbent polymer particles to prepare dried super absorbent polymer (step 4) is conducted.

This step is a step of drying the moisture of hydrated super absorbent polymer particles, which is obtained by neutralizing at least a part of the acid groups of the polymer and micronizing the polymer in the presence of a surfactant.

In the common preparation method of super absorbent polymer, it is in general that the drying step is conducted until the moisture content of super absorbent polymer becomes less than 10 wt%, but according to one embodiment of the invention, drying is conducted such that the moisture content of super absorbent polymer becomes 10 wt% or more, for example, about 10 to about 20 wt%, or about 10 to about 15 wt%. However, the invention is not limited thereto.

For this purpose, a temperature in a dryer used in the drying step may be about 150°C or less, for example about 80°C to about 150°C, and the drying may be conducted at relatively low temperature. If the temperature in the dryer is too low, drying time may be too lengthened, and if the drying temperature is too high, super absorbent polymer having lower moisture content than the above desired moisture content may be obtained.

Wherein, the drying may be conducted by moving type drying. Such moving type drying is distinguished from fixed-bed type drying according to whether or not material moves during drying.

The moving type drying refers to a method of drying while mechanically stirring a dried body. Wherein, a direction where hot air passes through material may be identical to or different from the circulation direction of the material. Alternatively, material may be circulated inside a dryer, and heat transfer fluid may be passed through a separate pipe outside the dryer to dry the material.

On the other hand, fixed-bed type drying refers to a method of drying wherein hot air passes through material from the top to the bottom, while material to be dried is stopped on a bottom such as a perforated steel plate through which air can pass.

Thus, it is preferable that hydrated super absorbent polymer is dried by moving type drying because uniform drying can be completed in a short time.

As an apparatus capable of drying by such moving type drying, a horizontal-type mixer, a rotary kiln, a paddle dryer, a steam tube dryer, or commonly used moving type dryer, and the like may be used.

**Step 5: Grinding step**

Next, a step of grinding the dried super absorbent polymer to prepare super absorbent polymer particles is conducted.

Specifically, the grinding step may be conducted by grinding dried super absorbent polymer particles to a particle size of normal particle level, namely, particle diameter of 150 $\mu$m to 850 $\mu$m.

A grinder used for this purpose may be, specifically, a vertical pulverizer, a turbo cutter, a turbo grinder, a rotary cutter mill, a cutter mill, a disc mill, a shred crusher, a crusher, a chopper or a disc cutter, and the like, but not limited thereto.

Alternatively, as the grinder, a pin mill, a hammer mill, a screw mill, a roll mill, a disc mill or a jog mill, and the like may be used, but the grinder is not limited thereto.

Meanwhile, according to the preparation method of the invention, in the micronization step, super absorbent polymer particles having smaller particle size distribution than in the conventional chopping step may be realized, and since moving type drying is conducted, moisture content after drying may be 10wt% or more and maintained relatively high, and thus, even if grinding is conducted under mild conditions with smaller grinding force, super absorbent polymer having very high content of normal particles of 150 $\mu$m to 850 $\mu$m may be formed, and a rate of fine particles generated may be significantly reduced.

The super absorbent polymer particles thus prepared may comprise super absorbent polymer particles having particle diameter of 150 $\mu$m to 850 $\mu$m, i.e., normal particles, in the content of 80 wt% or more, 85 wt% or more, 89 wt% or more, 90 wt% or more, 92 wt% or more, 93 wt% or more, 94 wt% or more, or 95 wt% or more, based on the total weight. Such a particle diameter of polymer particle may be measured according to European Disposables and Nonwovens Association(EDANA) standard EDANA WSP 220.3.

And, the super absorbent polymer particles may comprise fine particles having particle diameters less than 150 $\mu$m, in the content of about 20 wt% or less, or about 18 wt% or less, or about 15 wt% or less, or about 13 wt% or less, or about 12 wt% or less, or about 111 wt% or less, or about 10 wt% or less, or about 9 wt% or less, or about 8 wt% or less, or about 5 wt% or less, based on the total weight. It is contrasting to super absorbent polymer prepared according to the conventional preparation method, having fine particle content greater than about 20 wt% to about 30 wt%.

**Additional step**

After the step of grinding super absorbent polymer particles, a step of classifying the ground super absorbent

polymer particles according to particle diameter may be further conducted.

And, after grinding and/or classifying the super absorbent polymer particles, a step of forming a surface crosslink layer on at least a part of the surfaces of the super absorbent polymer particles, in the presence of a surface crosslinking agent, may be further conducted. By this step, crosslinked polymer included in the super absorbent polymer particles is additionally crosslinked by a surface crosslinking agent, to form a surface crosslink layer on at least a part of the surfaces of the super absorbent polymer particles.

As the surface crosslinking agent, those previously used in the preparation of super absorbent polymer may be used without specific limitations. For example, the surface crosslinking agent may comprise one or more polyols selected from the group consisting of ethylene glycol, propylene glycol, 1,3-ptopanediol, 1,4-butanediol, 1,6-hexanediol, 1,2-hexanediol, 1,3-hexanediol, 2-methyl-1,3-propanediol, 2,5-hexanediol, 2-methyl-1,3-pentanediol, 2-methyl-2,4-pentanediol, tripropylene glycol and glycerol; one or more carbonate-based compounds selected from the group consisting of ethylene carbonate, propylene carbonate and glycerol carbonate; epoxy compounds such as ethylene glycol diglycidyl ether, and the like; oxazoline compounds such as oxazolidinone, and the like; polyamine compounds; oxazoline compounds; mono-, di- or polyoxazolidinone compounds; or cyclic urea compounds; and the like.

Specifically, as the surface crosslinking agent, one or more, or 2 or more, or 3 or more kinds of the above described surface crosslinking agents may be used, and for example, ethylenecarbonate-propylenecarbonate(ECPC), propyleneglycol and/or glycerol carbonate may be used.

Such a surface crosslinking agent may be used in an amount of about 0.001 to about 5 parts by weight, based on 100 parts by weight of the super absorbent polymer particles. For example, the surface crosslinking agent may be used in an amount of 0.005 parts by weight or more, or 0.01 parts by weight or more, or 0.05 parts by weight or more, and 5 parts by weight or less, or 4 parts by weight or less, or 3 parts by weight or less, based on 100 parts by weight of the super absorbent polymer particles. By controlling the content range of the surface crosslinking agent within the above range, super absorbent polymer exhibiting excellent absorption properties may be prepared.

And, the step of forming a surface crosslink layer may be conducted with adding inorganic material to the surface crosslinking agent. Namely, in the presence of the surface crosslinking agent and inorganic material, a step of additionally crosslinking the surfaces of the super absorbent polymer particles to form a surface crosslink layer may be conducted.

As such inorganic material, one or more inorganic materials selected from the group consisting of silica, clay, alumina, silica-alumina composite material, titania, zinc oxide and aluminum sulfate may be used. The inorganic material may be used in powder form or liquid form, and particularly, may be used in the form of alumina powder, silica-alumina powder, titania powder, or nano silica solution. And, the inorganic material may be used in the content of about 0.001 to about 1 part by weight, based on 100 parts by weight of the super absorbent polymer particles.

And, a method of mixing the surface crosslinking agent with a super absorbent polymer composition is not limited. For example, the surface crosslinking agent and super absorbent polymer composition may be put in a reactor and mixed, or the surface crosslinking agent may be sprayed to the super absorbent polymer composition, or the super absorbent polymer composition and surface crosslinking agent may be continuously supplied to a continuously operated mixer and mixed.

When mixing the surface crosslinking agent and super absorbent polymer composition, water and methanol may be additionally mixed together and added. In case water and methanol are added, the surface crosslinking agent may be uniform ly dispersed in the super absorbent polymer composition. Wherein, the content of water and methanol added may be appropriately controlled so as to induce uniform dispersion of the surface crosslinking agent, prevent agglomeration of the super absorbent polymer composition, and optimize surface penetration depth of the crosslinking agent.

The surface crosslinking process may be conducted at a temperature of about 80°C to about 250°C. More specifically, the surface crosslinking process may be conducted at a temperature of about 100°C to about 220°C, or about 120°C to about 200°C, for about 20 minutes to about 2 hours, or about 40 minutes to about 80 minutes. When the above explained surface crosslinking process conditions are met, the surfaces of the super absorbent polymer particles may be sufficiently crosslinked, and absorbency under pressure may be increased.

The temperature rise means for the surface crosslinking reaction are not specifically limited. A heat transfer medium may be supplied, or heat source may be directly supplied to heat. Wherein, as the heat transfer medium, temperature-increased fluid such as steam, hot air, hot oil, and the like may be used, but not limited thereto, and the temperature of supplied heat transfer medium may be appropriately selected considering the means of heat transfer medium, temperature rise speed and a target temperature. Meanwhile, as the heat source directly supplied, electric heating and gas heating may be mentioned, but not limited thereto.

According to one embodiment of the invention, after the step of forming a surface crosslink layer on at least a part of the surface of the super absorbent polymer particles, one or more of a cooling step for cooling the super absorbent polymer particles on which the surface crosslink layer is formed, a hydrating step for introducing water in the super absorbent polymer particles on which the surface crosslink layer is formed, and a post treatment step for introducing

additives in the super absorbent polymer particles on which the surface crosslink layer is formed, may be further conducted. Wherein, the cooling step, hydrating step and post treatment step may be sequentially conducted, or simultaneously conducted.

The additives introduced in the post treatment step may include an agent for improving permeability, an anti-caking agent, an agent for improving flowability, and an anti-oxidant, and the like, but the invention is not limited thereto.

By optionally conducting the cooling step, hydrating step and post treatment step, the moisture content of the final super absorbent polymer may be improved, and super absorbent polymer products of higher qualities may be prepared.

The super absorbent polymer prepared by the preparation method may not only have rapid vortex time and low fine particle content, but also have absorption properties such as centrifuge retention capacity (CRC) and absorbency under pressure (AUP), equivalent to or more excellent than those of super absorbent polymer prepared by the conventional method.

And, it may have narrow particle diameter distribution and uniform particle size distribution, and low extractable contents (EC), thus providing super absorbent polymer having excellent permeability and rewet property.

The super absorbent polymer according to one embodiment comprises:

> polymer formed by crosslinking polymerization of water soluble ethylenically unsaturated monomers having acid groups and an internal crosslinking agent, at least a part of the acid groups of said polymer being neutralized, and comprises a surface crosslink layer formed on the polymer by additional crosslinking of the polymer by a surface crosslinking agent,
> wherein a vortex time is 30 seconds or less, and
> extractable contents measured after swelling for 1 hour according to EDANA method WSP 270.3, is 5 wt% or less.

For example, the super absorbent polymer of the invention may have centrifuge retention capacity(CRC), measured according to EDANA method WSP 241.3, in the range of about 30 g/g or more, or about 32 g/g or more, or about 34 g/g or more, or about 35 g/g or more, or about 36 g/g or more, or about 37 g/g or more, and about 50 g/g or less, or about 45 g/g or less, or about 40 g/g or less.

And, the super absorbent polymer of the invention may have absorbency under pressure(AUP) of 0.3 psi, measured according to EDANA method WSP 242.3, in the range of about 25 g/g or more, or about 27 g/g or more, or about 28 g/g or more, or about 29 g/g or more, or about 30 g/g or more, or about 31 g/g or more, and about 40 g/g or less, or about 35 g/g or less, or about 33 g/g or less.

And, the super absorbent polymer of the invention may have a vortex time of 30 seconds or less, or 28 seconds or less, or 27 seconds or less, or 26 seconds or less, or 25 seconds or less, or 24 seconds or less, or 23 seconds or less, or 22 seconds or less, or 21 seconds or less, or 20 seconds or less, or 19 seconds or less, or 18 seconds or less. The smaller vortex time is more excellent, and thus, the lower limit of the vortex time is theoretically 0 second, but for example, it may be about 5 seconds or more, or about 10 seconds or more, or about 12 seconds or more.

The vortex time means a time(unit: seconds) for which vortex of liquid disappears by rapid absorption, when super absorbent polymer is added to a saline solution and stirred, and it can be seen that as the time is shorter, super absorbent polymer has rapider initial absorption speed.

And, the super absorbent polymer of the invention may have extractable contents measured after swelling for 1 hour according to EDANA method WSP 270.3, of 5 wt% or less, or 4.8 wt% or less, or 4.5 wt% or less, or 4.3 wt% or less, or 4 wt% or less, or 3.9 wt% or less. The smaller extractable content is more excellent, and thus, the lower limit is theoretically 0, but for example, it may be 0.1 wt% or more, or 1 wt% or more.

**<Example>**

**Example 1**

(Polymer preparation step)

In a 10L glass container equipped with a stirrer and a thermometer, 1500g of acrylic acid, 6.3g of pentaerythritol triallyl ether internal crosslinking agent, and 3387g of water were mixed, and stirred while maintaining 5°C. Into the glass container including the mixture, nitrogen was introduced at 1000cc/min for 1 hour to replace with nitrogen condition. And then, as polymerization initiators, 20.1g of 0.3% hydrogen peroxide aqueous solution, 22.5g of 1% ascorbic acid aqueous solution, and 45.0g of 2% 2,2'-azobis-(2-amidinopropane)dihydrochloride aqueous solution were introduced, and simultaneously, 22.3g of 0.01% iron (II) sulfate aqueous solution was added as a reducing agent, thus initiating polymerization. After the temperature of the mixture reached 85°C, polymerization was conducted at 90±2°C for about 3 hours to obtain polymer.

(Neutralization and micronization step)

While rotating a micronizer (F200, Karl Schnell) equipped with a perforated plate including plural holes each having a hole size of 10 mm at 1500 rpm, 5000g of the obtained polymer was introduced and micronized to primary particles having particle diameter of tens to hundreds of micrometers. Wherein, in order to prevent excessive aggregation, 90g of 1.5w% aqueous solution of glycerol monolaurate(GML) was introduced.

And then, while rotating a meat chopper, which is a screw type chopper equipped with a perforated plate including plural holes each having a hole size of 6mm, at 500 rpm, the micronized polymer was introduced to prepare secondary aggregated particles, which process was repeated three times. Wherein, in the first pass, 1,904g of 50% NaOH aqueous solution was introduced to neutralize a part of the acid groups of the polymer. In the second pass, 18.8g of 15% $Na_2SO_4$ aqueous solution was introduced to neutralize a part of the acid groups of the polymer. In the third pass, polymer was passed without introducing additives, thus preparing hydrated super absorbent polymer particles.

(Drying step)

1,000g of the hydrated super absorbent polymer particles were introduced in a rotary kiln moving type dryer rotating at 120 rpm. While maintaining the temperature inside the dryer at 105°C, drying was conducted for 60 minutes to obtain polymer powders. The obtained powders were passed through 2 stage roll moll to obtain base resin (BR) powders.

(Surface crosslinking step)

Next, to 100g of the obtained base resin powders, a surface crosslinking solution prepared by introducing 4g of water, 6g of methanol, 0.30g of ethylene glycol diglycidyl ether(EJ-1030S), 0.1g of propylene glycol and 0.2g of aluminum sulfate was mixed for 1 minute, and it was subjected to a surface crosslinking reaction at 140°C for 50 minutes to obtain surface crosslinked super absorbent polymer.

## Example 2

Super absorbent polymer was prepared by the same method as Example 1, except that in the drying step of Example 1, 1,000g of hydrated super absorbent polymer particles were introduced in a ventilating dryer including a perforated plate instead of the rotary kiln dryer, and while maintaining the temperature inside the dryer at 140°C, drying was conducted for 40 minutes.

## Example 3

In the neutralization and micronization step of Example 1, while rotating a micronizer(F200, Karl Schnell) equipped with a perforated plate including plural holes each having a hole size of 10 mm at 1500 rpm, 5000g of the obtained polymer was introduced and micronized to primary particles having particle diameter of tens to hundreds of micrometers. Wherein, 1,904g of 50% NaOH aqueous solution was introduced to neutralize a part of the acid groups of the polymer. And then, while rotating a micronizer(F200, Karl Schnell) equipped with a perforated plate including plural holes each having a hole size of 10mm at 1500 rpm, the neutralized and micronized polymer was introduced to prepare secondary aggregated particles. Wherein, in order to prevent excessive aggregation, 180g of 1.5 w% aqueous solution of glycerol monolaurate(GML) was introduced, and 18.8g of 15% $Na_2SO_4$ aqueous solution was introduced to neutralize a part of the acid groups of the polymer. Otherwise, the same procedure as Example 1 was conducted to prepare super absorbent polymer.

## Comparative Example

(Polymer preparation step)

In a glass reactor, 100g of acrylic acid, 130g of 31.5wt% caustic soda(NaOH), 0.15g of ethylene glycol diglycidyl ether, 0.2 g of sodium persulfate thermal polymerization initiator, 0.01g of diphenyl(2,4,6-trimethylbenzoyl)phosphine oxide photopolymerization initiator, 5g of capsule type blowing agent F-36D, 5g of sodium dodecyl sulfate blowing stabilizer, and 45g of water were mixed to prepare a monomer composition.

The monomer composition was put in a square reaction container of width 30cm x length 30cm, and irradiated by UV at the intensity of 10mW/cm$^2$ to progress a polymerization reaction for 60 seconds, thus obtaining hydrogel polymer (moisture content = 44.3 wt%).

(Grinding step)

The hydrogel polymer prepared in step 1 was cut to width 5cm x length 5cm, and the hydrogel was ground using a screw type meat chopper. Wherein, in the screw type chopper, a perforated plate equipped with plural chopping holes each having a hole size of 16mm was used.

(Drying step)

Next, 1,000g of the ground super absorbent polymer hydrogel was introduced in a ventilating dryer including a perforated plate. While maintaining the temperature inside the dryer at 180°C, drying was conducted for 40 minutes to obtain resin powders. The obtained powers were passed through 2 stage roll mill to obtain base resin(BR) powders.

(Grinding and classification step)

The base resin was ground to particles having particle diameter of 150$\mu$m to 850$\mu$m using 2 stage roll mill(GRAN-U-LIZER™, MPE).

From the ground product, only super absorbent polymer particles having particle diameter of 150$\mu$m to 850$\mu$m were selectively recovered using a classification sieve.

(Surface crosslinking step)

To 100g of the obtained super absorbent polymer particles, a surface crosslinking solution prepared by mixing 5g of water, 5.3g of propylene glycol, 0.1g of ethylene glycol diglycidyl ether and 0.87g of 23% aluminum sulfate aqueous solution was introduced and mixed for 2 minutes, and it was subjected to surface crosslinking reaction at 130°C for 50 minutes to prepare the final super absorbent polymer.

**<Experimental Examples>**

For the base resin(BR) or surface crosslinked final super absorbent polymer(PD) prepared in Examples and Comparative Example, properties were evaluated as follows and described in the following Table 1.

Unless otherwise indicated, all the following property evaluations were progressed at a constant temperature constant humidity(23±1°C, relative humidity 50±10%), and a physiological saline or brine means an aqueous solution of 0.9 wt% sodium chloride(NaCl).

And, for rewet property evaluation, tap water having electric conductivity of 170 to 180 µS/cm, as measured using Orion Star A222 (Company: Thermo Scientific), was used.

And, unless otherwise indicated, the property evaluation of base resin was conducted for resin having particle diameter of 300$\mu$m ~ 400$\mu$m, classified with ASTM standard sieve, and the property evaluation of the final surface crosslinked super absorbent polymer was conducted for polymer having particle diameter of 150$\mu$m ~ 850$\mu$m, classified with ASTM standard sieve.

(1) Centrifuge Retention Capacity (CRC)

Centrifuge retention capacity of each super absorbent polymer of Examples and Comparative Example, by absorption rate under no load, was measured according to European Disposables and Nonwovens Association (EDANA) standard EDANA WSP 241.3.

Specifically, $W_0$(g) (about 0.2g) of each super absorbent polymer obtained in Examples and Comparative Example was uniformly put in an envelope made of non-woven fabric and the envelope was sealed, and then, it was soaked in physiological saline (0.9 wt%) at room temperature. After 30 minutes, the envelope was drained under 250G for 3 minutes, and the weight of the envelope, $W_2$(g), was measured. And, the same operation was conducted without polymer, and the weight at that time, $W_1$(g), was measured.

Using the obtained weights, CRC(g/g) was calculated according to the following Mathematical Formula 2.

[Mathematical Formula 2]

$$CRC\ (g/g) = \{[W_2(g) - W_1(g)]/W_0(g)\} - 1$$

(2) Absorbency under Pressure (AUP)

For each super absorbent polymer of Examples and Comparative Example, absorbency under pressure of 0.3 psi was measured according to EDANA method WSP 242.3.

Specifically, on the bottom of a plastic cylinder having an inner diameter of 25 mm, 200 mesh wire netting made of stainless was installed. Under room temperature and 50% humidity conditions, $W_0$(g) (0.9 g) of super absorbent polymer was uniformly scattered on the wire netting, and a piston having an outer diameter slightly smaller than 25 mm, capable of uniformly applying a load of 0.3 psi, was installed such that there was no gap with the inner wall of the cylinder, and up and down movement was not hindered. At this time, the weight of the apparatus, $W_3$(g), was measured.

Inside of a petri dish having a diameter of 150 mm, a glass filter having a diameter of 90 mm and a thickness of 5 mm was placed, and physiological saline consisting of 0.9 wt% sodium chloride was poured to the same level of the upper side of the glass filter. One piece of a filter paper having a diameter of 90 mm was put thereon. On the filter paper, the above measurement apparatus was laid, and liquid was absorbed under load for 1 hour. After 1 hour, the measurement apparatus was raised, and the weight $W_4$(g) was measured.

Using the obtained weights, absorbency under pressure(g/g) was calculated according to the following Mathematical Formula 3.

[Mathematical Formula 3]

$$AUP(g/g) = [W_4(g) - W_3(g)]/W_0(g)$$

The measurement was repeated 5 times, and the average and standard deviation were calculated.

(3) Moisture content

A moisture content is the content of moisture occupied, based on the total weight of super absorbent polymer, and was calculated according to the following Mathematical Formula 4.

Specifically, while raising the temperature of super absorbent polymer and drying through infrared heating, weight decrease according to the evaporation of moisture in the super absorbent polymer was measured to calculate the moisture content. Wherein, drying conditions were set such that a temperature was increased from room temperature to 180°C and then maintained at 180°C, and the total drying time was 40 minutes including the temperature rise step of 5 minutes. Before/after drying, the weights of super absorbent polymer were respectively measured, and the moisture content was calculated according to the following Mathematical Formula 4.

[Mathematical Formula 4]

$$\text{Moisture content(wt\%)} = [(Ao-At) / Ao ]X100$$

In the Formula, At is the weight of super absorbent polymer after drying, and Ao is the weight of super absorbent polymer before drying.

(4) Vortex time

A vortex time was measured as the unit of seconds, according to the method described in International Patent Publication No. 1987-003208.

Specifically, in 50 mL of physiological saline of 23°C to 24°C, 2g of super absorbent polymer was introduced, and stirred with a magnetic bar(diameter 8 mm, length 30 mm) at 600 rpm, and a time until vortex disappeared was measured as the unit of seconds, to calculate a vortex time.

(5) Extractable Contents (EC)

For 2g of super absorbent polymer, extractable contents after swelling for 1 hour was measured according to EDANA method WSP 270.3.

(6) Fine particle content

The base resin(BR) powders of Examples and Comparative Example were classified using a standard sieve having a gradation of 850 $\mu$m(#20), 600 $\mu$m(#30), 300 $\mu$m (#50), and 150 $\mu$m(#100), and the weight of fine particles having particle diameter less than 150 $\mu$m was measured, and then, expressed as a percentage based on the total weight of the bas resin powders.

(7) Tap water long term rewet under load (6hr Rewet)

① In a petri dish having a diameter of 13cm, 4g of super absorbent polymer was uniformly scattered and uniformly distributed using a spatula, and 200g of tap water was poured, and then, the super absorbent polymer was swollen.
② On the super absorbent polymer swollen for 6 hours, 20 pieces of filter papers each having a diameter of 11 cm (manufacturing company: whatman, catalog No. 1004-110, pore size 20-25 $\mu$m, diameter 11cm) were laid, and pressurized with 5kg weight(0.75 psi) for 1 minute.
③ After pressurization for 1 minute, the amount of tap water(unit: g) permeated in the filter papers was measured.

(8) TWFA (Tap Water Free Absorbency, absorption capability for 1 minute)

Each 1.0 g($W_5$) of the super absorbent polymer of Examples and Comparative Example was put in an envelope made of non-woven fabric (15 cm x 15 cm) and soaked in 500 mL of distilled water of 24°C for 1 minute. After 1 minute, the envelope was taken out of the distilled water, and then, hung and left for 1 minute. And then, the weight of the envelope(We) was measured. And, the same operation was conducted without super absorbent polymer, and then, the weight at that time, $W_7$(g), was measured.

Using the obtained weights, TWFA was calculated according to the following Mathematical Formula 5.

[Mathematical Formula 5]

$$TWFA = \{[W_7(g) - W_6(g) - W_5(g)]/W_5(g)\}$$

[Table 1]

| | | Example 1 | Example 2 | Example 3 | Comparative Example |
|---|---|---|---|---|---|
| BR | CRC(g/g) | 48.0 | 49.3 | 45.7 | 40 |
| | Moisture content(wt% ) | 11.1 | 4.3 | 10.7 | 3.1 |
| | Fine particle content (wt%) | 10.7 | 12.6 | 4.7 | 25.5 |
| PD | CRC(g/g) | 37.1 | 39.1 | 36.8 | 33.5 |
| | 0.3AUP(g/g) | 31.7 | 31.0 | 32.5 | 28 |
| | Vortex(sec) | 18 | 23 | 17 | 30 |
| | EC(wt%) | 3.9 | 3.9 | 4.5 | 5.3 |
| | TWFA(g) | 166 | 163 | 170 | 150 |
| | 6hr Rewet(g) | 0.5 | 0.6 | 0.5 | 1.5 |

(In Table 1, BR means base resin after drying step and before surface crosslinking step, and PD means the final super absorbent polymer product after surface crosslinking step).

In Examples 1 to 3, according to one embodiment of the invention, non-neutralized water soluble ethylenically unsaturated monomers were polymerized by a batch polymerization method, and then, a surfactant and a neutralization agent were introduced to post-neutralize and micronize the polymer, thus preparing super absorbent polymer.

Referring to Table 1, compared to the process of Comparative Example wherein monomers in which a part of the acid groups were neutralized were polymerized, and then, chopped and dried, in Examples 1 to 3, the fine particle content of base resin was remarkably decreased, and after surface crosslinking, extractable contents of super absorbent

polymer were also remarkably decreased.

Comparing Examples 1 and 2, although base resin having low fine particle content may be obtained by post-neutralization and micronization process, it was confirmed that in order to achieve excellent vortex time, moving type drying using a rotary type dryer of Example 1 is more favorable than the fixed-bed type drying of Example 2.

## Claims

1. A method for preparing super absorbent polymer comprising steps of:

   conducting polymerization of a monomer composition comprising water soluble ethylenically unsaturated monomers having acid groups, an internal crosslinking agent, and a polymerization initiator, to form a polymer in which the water soluble ethylenically unsaturated monomers having acid groups and the internal crosslinking agent are crosslinked (step 1);
   neutralizing at least a part of the acid groups of the polymer (step 2);
   micronizing the polymer in the presence of a surfactant (step 3);
   drying the neutralized and micronized polymer, to prepare dried super absorbent polymer particles (step 4); and
   grinding the dried super absorbent polymer particles to prepare super absorbent polymer particles (step 5).

2. The method for preparing super absorbent polymer according to claim 1, wherein the step of forming the polymer is conducted in a batch type reactor.

3. The method for preparing super absorbent polymer according to claim 1, wherein the step 2 and step 3 are sequentially, alternately, or simultaneously conducted.

4. The method for preparing super absorbent polymer according to claim 1, wherein the micronizing step is conducted by a micronizing apparatus, and the micronizing apparatus comprises:

   a body part comprising a transfer space where polymer is transferred, inside;
   a screw member that is rotatably installed inside the transfer space to move polymer;
   a driving motor providing rotation force to the screw member;
   a cutter member that is installed in the body part to grind the polymer; and
   a perforated plate discharging the polymer ground by the cutter member outside the body part, in which plural holes are formed.

5. The method for preparing super absorbent polymer according to claim 1, wherein the step of drying neutralized and micronized polymer is conducted by moving type drying.

6. The method for preparing super absorbent polymer according to claim 5, wherein the moving type drying is conducted using a horizontal-type mixer, a rotary kiln, a paddle dryer, or a steam tube dryer.

7. The method for preparing super absorbent polymer according to claim 1, wherein the step of drying neutralized and micronized polymer is conducted at a temperature of 150°C or less.

8. The method for preparing super absorbent polymer according to claim 1, wherein the moisture content of dried super absorbent polymer particles obtained by conducting step 4 is 10 to 20 wt%.

9. The method for preparing super absorbent polymer according to claim 1, wherein at least a part of the surfactant exists on the surface of the polymer.

10. The method for preparing super absorbent polymer according to claim 1, wherein the surfactant comprises a compound represented by the following Chemical Formula 2 or a salt thereof:

[Chemical Formula 2]

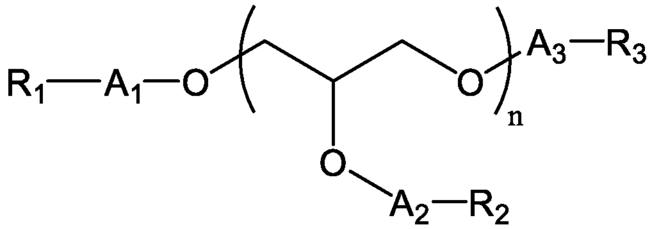

in the Chemical Formula 2,

$A_1$, $A_2$ and $A_3$ are each independently, a single bond, carbonyl,

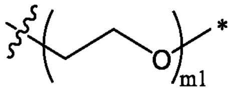,

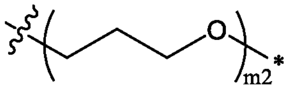 or 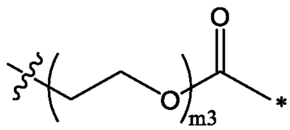,

provided that one or more of them are carbonyl or

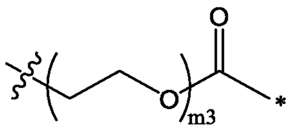

, wherein m1, m2 and m3 are each independently, an integer of 1 to 8, each

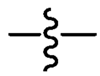

is connected to adjacent oxygen atom, and each



is connected to adjacent $R_1$, $R_2$ and $R_3$,
$R_1$, $R_2$ and $R_3$ are each independently, hydrogen, C6-18 linear or branched alkyl or C6-18 linear or branched alkenyl, and
n is an integer of 1 to 9.

**11.** The method for preparing super absorbent polymer according to claim 1, wherein the super absorbent polymer particles comprise super absorbent polymer particles having particle diameter less than 150 $\mu$m in the content of 20 wt% or less, based on the total weight of the super absorbent polymer particles.

**12.** The method for preparing super absorbent polymer according to claim 1, further comprising a step of classifying the super absorbent polymer particles according to particle diameter.

**13.** The method for preparing super absorbent polymer according to claim 1 or claim 12, further comprising a step of forming a surface crosslink layer on at least a part of the surfaces of the super absorbent polymer particles.

**14.** A super absorbent polymer comprising polymer formed by crosslinking polymerization of water soluble ethylenically unsaturated monomers having acid groups and an internal crosslinking agent, at least a part of the acid groups of said polymer being neutralized, and comprising a surface crosslink layer formed on the polymer by additional crosslinking of the polymer by a surface crosslinking agent,

wherein a vortex time is 30 seconds or less, and
extractable contents measured after swelling for 1 hour according to EDANA method WSP 270.3 are 5 wt% or less.

**15.** The super absorbent polymer according to claim 14, wherein centrifuge retention capacity (CRC) measured according to EDANA method WSP 241.3, is 30 g/g to 50 g/g.

**16.** The super absorbent polymer according to claim 14, wherein absorbency under pressure (AUP) of 0.3 psi, measured according to EDANA method WSP 242.3, is 25 g/g to 40 g/g.

FIG. 1

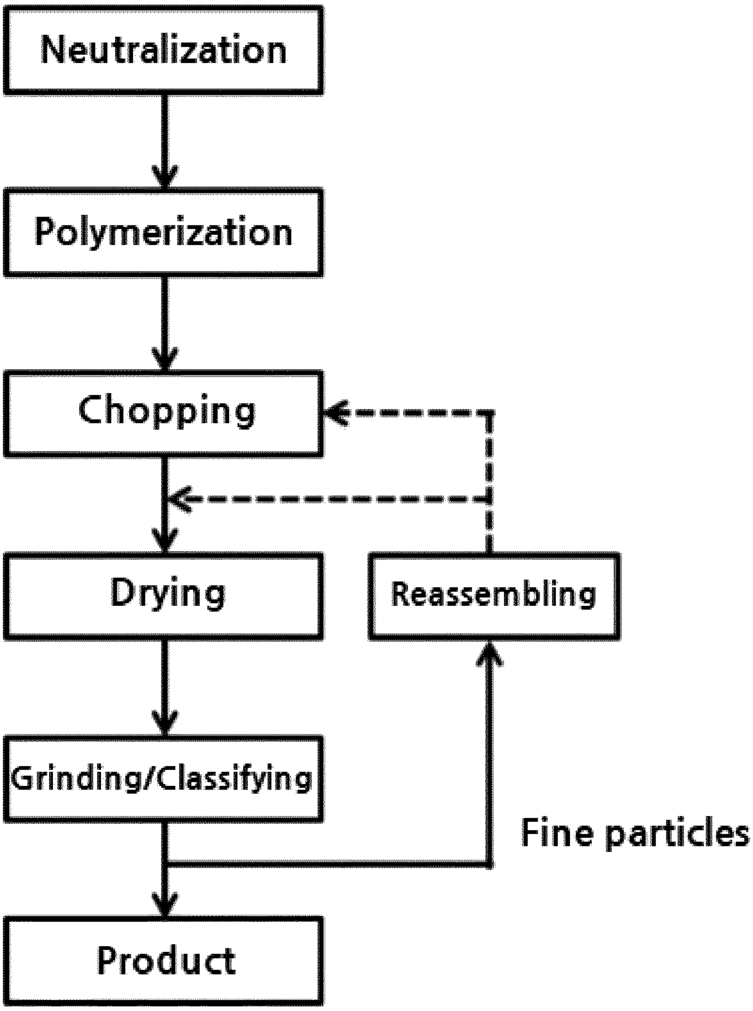
Neutralization
Polymerization
Chopping
Drying
Reassembling
Grinding/Classifying
Fine particles
Product

## INTERNATIONAL SEARCH REPORT

International application No.
**PCT/KR2022/008651**

**A. CLASSIFICATION OF SUBJECT MATTER**

**C08J 3/12**(2006.01)i; **C08J 3/24**(2006.01)i; **C08F 2/01**(2006.01)i; **B29B 9/12**(2006.01)i

According to International Patent Classification (IPC) or to both national classification and IPC

**B. FIELDS SEARCHED**

Minimum documentation searched (classification system followed by classification symbols)

C08J 3/12(2006.01); B02C 18/36(2006.01); B26D 5/22(2006.01); B29B 9/06(2006.01); C08F 2/00(2006.01); C08F 20/04(2006.01); C08F 6/06(2006.01); C08J 3/075(2006.01); C08J 3/24(2006.01); C08K 3/013(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus), Google & keywords: 고흡수(absorbent, super-absorbent, SAP), 아크릴레이트(acrylate), 계면활성제(surfactant), 미립화(grind, atomize, pulverize, mill, crush), 건조(dry)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2016-124901 A (NIPPON SHOKUBAI CO., LTD.) 11 July 2016 (2016-07-11)<br>See abstract; claims 1 and 6-8; and paragraphs [0085], [0086], [0092], [0093], [0102], [0128], [0179]-[0197] and [0202]. | 1-3,5-9,11-16<br>4,10 |
| Y | KR 10-2021-0062459 A (LG CHEM, LTD.) 31 May 2021 (2021-05-31)<br>See claims 1 and 2; paragraphs [0054] and [0055]; and figure 3. | 4 |
| Y | KR 10-2019-0077541 A (NIPPON SHOKUBAI CO., LTD.) 03 July 2019 (2019-07-03)<br>See paragraphs [0151], [0152], [0165]-[0170] and [0264]. | 10 |
| X | KR 10-2019-0069101 A (LG CHEM, LTD.) 19 June 2019 (2019-06-19)<br>See claims 1 and 8; and paragraph [0300], example 18. | 14-16 |
| Y | JP 2000-063527 A (NIPPON SHOKUBAI CO., LTD.) 29 February 2000 (2000-02-29)<br>See claims 1-4; and figures 1-5. | 4 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **30 September 2022** | **30 September 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

International application No.
**PCT/KR2022/008651**

**C. DOCUMENTS CONSIDERED TO BE RELEVANT**

| Category* | Citation of document, with indication, where appropriate, of the relevant passages | Relevant to claim No. |
|---|---|---|
| Y | JP 59-030826 A (CASSELLA FARBWERKE MAINKUR AG) 18 February 1984 (1984-02-18) See claim 1; and page 4, the top of the left column. | 10 |
| A | KR 10-2020-0055648 A (LG CHEM, LTD.) 21 May 2020 (2020-05-21) See claims 1-14. | 1-16 |

Form PCT/ISA/210 (second sheet) (July 2019)

**INTERNATIONAL SEARCH REPORT**
**Information on patent family members**

International application No.
**PCT/KR2022/008651**

| Patent document cited in search report | Publication date (day/month/year) | Patent family member(s) | Publication date (day/month/year) |
|---|---|---|---|
| JP 2016-124901 A | 11 July 2016 | JP 6425341 B2 | 21 November 2018 |
| KR 10-2021-0062459 A | 31 May 2021 | BR 112022001362 A2 | 22 March 2022 |
| | | CN 114096388 A | 25 February 2022 |
| | | EP 3984711 A1 | 20 April 2022 |
| | | US 2022-0258380 A1 | 18 August 2022 |
| | | WO 2021-101277 A1 | 27 May 2021 |
| KR 10-2019-0077541 A | 03 July 2019 | CN 109996833 A | 09 July 2019 |
| | | CN 109996833 B | 11 February 2022 |
| | | CN 109996835 A | 09 July 2019 |
| | | EP 3543279 A1 | 25 September 2019 |
| | | EP 3543280 A1 | 25 September 2019 |
| | | JP 2019-052285 A | 04 April 2019 |
| | | JP 6800998 B2 | 16 December 2020 |
| | | JP 6913107 B2 | 04 August 2021 |
| | | JP 6918407 B2 | 11 August 2021 |
| | | KR 10-2019-0077540 A | 03 July 2019 |
| | | US 2019-0329219 A1 | 31 October 2019 |
| | | US 2019-0329220 A1 | 31 October 2019 |
| | | WO 2018-092863 A1 | 24 May 2018 |
| | | WO 2018-092864 A1 | 24 May 2018 |
| KR 10-2019-0069101 A | 19 June 2019 | None | |
| JP 2000-063527 A | 29 February 2000 | JP 3415036 B2 | 09 June 2003 |
| JP 59-030826 A | 18 February 1984 | DE 3221947 A1 | 22 December 1983 |
| | | EP 0096790 A1 | 28 December 1983 |
| | | EP 0096790 B1 | 16 December 1987 |
| | | JP 03-073576 B2 | 22 November 1991 |
| KR 10-2020-0055648 A | 21 May 2020 | CN 111436201 A | 21 July 2020 |
| | | EP 3680277 A1 | 15 July 2020 |
| | | JP 2021-510741 A | 30 April 2021 |
| | | JP 6973874 B2 | 01 December 2021 |
| | | KR 10-2418591 B1 | 07 July 2022 |
| | | US 2021-0147640 A1 | 20 May 2021 |
| | | WO 2020-101167 A1 | 22 May 2020 |

Form PCT/ISA/210 (patent family annex) (July 2019)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020210079644
- KR 1020220074251


### Non-patent literature cited in the description


- **ODIAN.** Principle of polymerization. Wiley, vol. 1981, 203